# EUROPEAN PATENT SPECIFICATION

(11) **EP 1 344 860 B1**
(45) Date of publication and mention of the grant of the patent: **26.09.2007**
(21) Application number: 03425109.0
(22) Date of filing: 24.02.2003
(51) Int. Cl.: D06B 23/14, F16J 13/18

(54) **Tank for dyeing textile materials**
Behälter zum Färben von Textilmaterialen
Cuve pour teindre des matières textiles

(30) Priority: 13.03.2002 IT FI20020046
(43) Date of publication of application: 17.09.2003
(73) Proprietor: Tecnorama S.r.l., 59100 Prato (IT)
(72) Inventor: Anguillesi, Mauro, 59011 Seano, Carmignano (Prato) (IT); Bartalucci, Moreno, 50052 Certaldo (Firenze) (IT); Scatizzi, Mario, 51030 Pistoia (IT)
(74) Representative: Lanzoni, Luciano

(56) References cited:
- WO-A-01/86052
- BE-A- 397 012
- GB-A- 1 036 813
- GB-A- 1 258 076
- US-A- 1 874 833
- US-A- 3 406 997
- PATENT ABSTRACTS OF JAPAN vol. 1996, no. 03, 29 March 1996 (1996-03-29) -& JP 07 293697 A (HANIYUUDA TEKKO:KK), 7 November 1995 (1995-11-07)

## Description

The present invention relates to a tank for dyeing textile materials.

The dyeing of textile materials is known to include, in general, dipping the materials into a dyeing bath consisting of an aquous solution in which suitable amounts of colouring substances and chemicals are dissolved. Usually, said solution is brought to a predetermined temperature higher than the ambient one to meet process requirements; this implies an inner pressure within the tanks which is higher than the external one. It is necessary to ensure, therefore, a perfect hermetic seal of the mouths for the dipping/removal of the materials to avoid unwanted emission of vapors and leakage of liquid, and thus seriously compromise the dyeing outcome.

From GB1036813 it is known a machine for the wet treatment of textile materials in which the materialas are wet treated in an annulus formed between a vat and a central cylinder, and the vat is provided with a pressure lid which can be opened and closed by an actuator connected to the lid by an arm.

From US3406997 it is known a mechanism to close pressurised doors of dying tank, in which an arrangement of clamps is provided to close a pair of doors on respective openings of the tank.

The main object of the present invention is to propose a tank for dyeing textile materials with an automatic apparatus for the opening and closing of the same tank, said apparatus ensuring maximum safety and a perfect hermetic seal of the tank under operating conditions.

This result has been achieved, according to the invention, by adopting the idea of making a tank having the characteristics disclosed in the claim 1. Further characteristics being set forth in the dependent claims.

The advantages deriving from the present invention lie essentially in the fact that it is possible to achieve maximum safety in the operation of the tank by providing the automatic opening and closing thereof and preventing said opening in the absence of the forces exerted for closing the same tank; that an apparatus according to the invention is relatively easy to make, cost-effective, and reliable even after a prolonged service life; that a tank provided with an opening and closing apparatus according to the invention can be advantageously used, that is, mounted, also in automatic or semiautomatic plants for handling materials under treatment.

These and other advantages and characteristics of the invention will be best understood by anyone skilled in the art from a reading of the following description in conjunction with the attached drawings given as a practical exemplification of the invention, but not to be considered in a limitative sense, wherein:

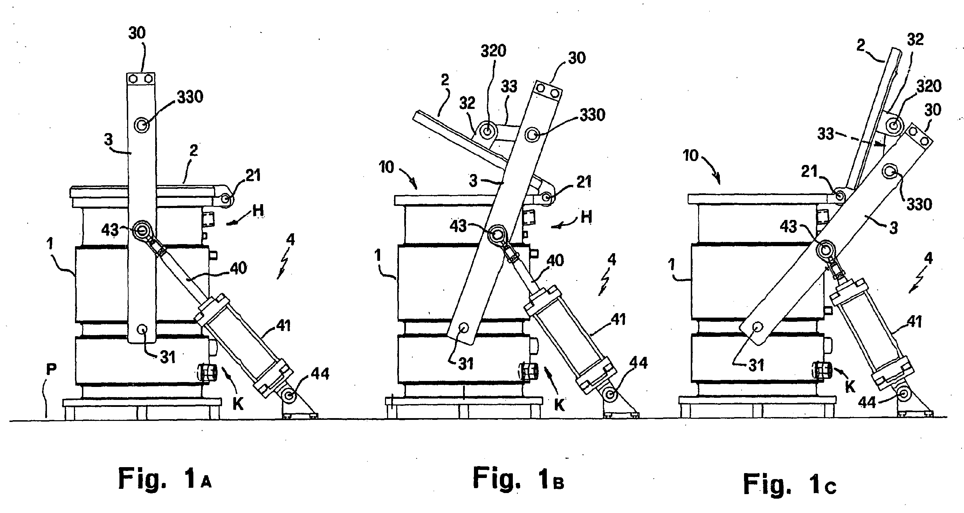

- Figs. 1A-1C show schematically a sequence of steps relating to the opening of a tank according to the invention;
- Figs. 2A-2G show schematically a sequence of operational steps relating to the removal of a basket from a standby plane (Figg. 2A, 2B), to the lifting of the same basket from the standby plane (Fig. 2C), to the introduction of the basket into the tank shown in Figg. 1A-1C (Figg. 2D, 2E), to the release of the basket into the tank (Fig. 2F) and to the closing of the latter (Fig. 2G);
- Fig. 3A shows an enlarged detail of the drawing of Fig. 2C relating to a possible embodiment of the baskets-driving unit, the said unit being shown upon hooking the basket;
- Fig. 3B shows an enlarged detail of the drawing of Fig. 2E relating to the apparatus of Fig. 3A but in a condition of releasing a basket;
- Figs. 4A-4C show schematically a sequence of operational steps relating to the removal of a reel-holder from a standby plane (Figs. 4A, 4B) and to the hooking of the reel-holder (Fig. 4C) which is to be introduced into the tank shown in the preceding figures, the steps relating to the introduction of the reel-holder into the tank being identical to those shown in Figs. 2D-2G;
- Fig. 5 is a diagram referring to a possible relative positioning of some hinges of the system;
- Figs. 6A and 6B show schematically, in side view (Fig. 6A) and front view (Fig. 6B), a tank in closing condition;
- Fig. 6C is an enlarged view of a detail not visible in Fig. 6A.

Reduced to its basic structure, and reference being made to the figures of the attached drawings, a tank for dyeing textile materials according to the invention comprises a substantailly cylindrical container (1) with a mouth (10), for the introduction and respectively the removal of materials to be dyed, and with a lid (2) associated therewith. The opening of the lid (2) allows introducing the materials into the body (1) and, respectively, removing them therefrom upon completion of the dyeing process within the tank. The closing of the lid (2) is operated automatically to start the dyeing process after the introduction of the materials into the body (1). The said lid is engaged with driving means operating a rotation, that is, the positioning thereof, for the closing and respectively opening of the tank, for respectively enabling and disabling the access to the body (1) wherein the dyeing liquid is held. The composition of the dyeing liquid is determined according to criteria known to those skilled in the art.

Advantageously, according to the invention, the lid (2) is associated with the body (1) by a connecting hinge (21) and by a fork structure comprising two diametrally opposite arms (3) which, in correspondence or in the vicinity of the respective free ends are connected to the container (1) via transverse hinges (31); in practice, the axis of each hinge (31) is orthogonal to the respective arm (3) and is parallel to that of said hinge (21), the latter linking the lid (2) to the body of the container (1). The two arms (3) are joined on top by a crosspiece (30). At a point between said crosspiece (30) and the lid (2), a lever (33) is connected to the two arms (3), said lever being in turn connected to an upper appendix (32) of lid (2). The connection between the lever (33) and the arms (3) is made via a hinge (330). The connection between the lever (33) and the lid (2) is made via a hinge (320). In practice, the axes of all the hinges above indicated are parallel to each other.

The said fork structure is engaged with a cylinder actuator (4). The latter is connected to one of the two arms (3) of the structure. More specifically, and as illustrated in the figures of the attached drawings, the rod (40) of actuator (4) is engaged with one of the arms (3) via a corresponding hinge (43), the shell (41) of cylinder (4) being engaged, via a corresponding hinge (44), with a bearing plane (P) which supports also the tank's body (1). The axes of hinges (43, 44) are parallel to each other and to the axes of the other hinges mentioned above.

In order to lift the lid (2), thereby allowing the introduction and removal of the material to be dyed, the rod (40) of actuator (4) is driven backwards. Vice versa, to lower the lid (2) and thus closing the tank, the rod (4) is driven outwardly.

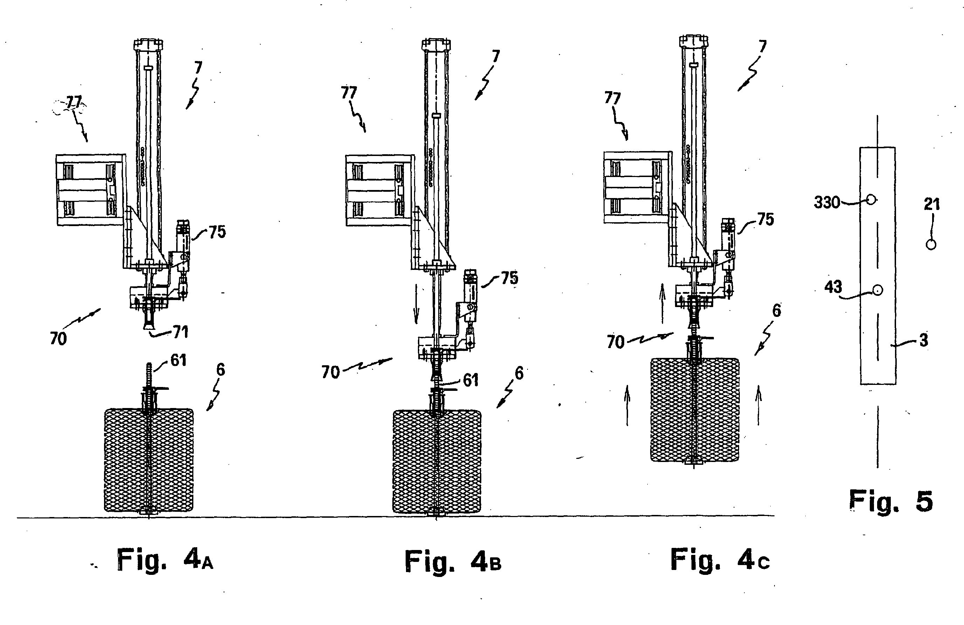

Advantageously, as illustrated diagrammatically in Fig. 5, the hinges (43) and (330) can be offset, that is, put out of alignment, with the hinge (330) being at a distance from hinge (21) longer than from hinge (43), thereby allowing a higher operational safety, that is, preventing the spontaneous opening of the lid (2) possibly due to the pressure exerted onto the inner surface thereof by the vapors which form as a consequence of heating the dyeing bath within the tank.

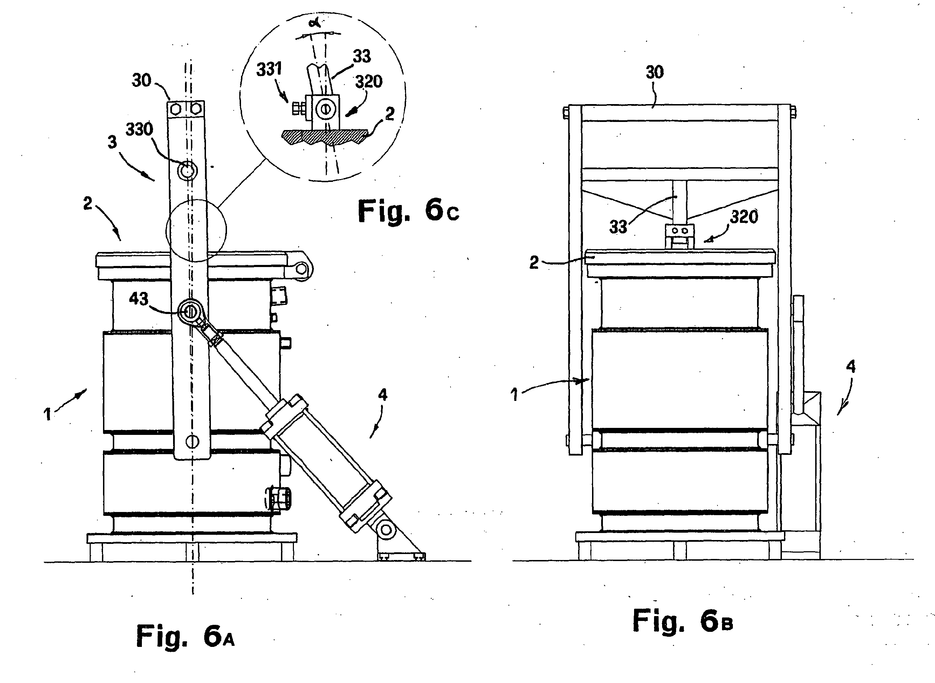

With reference to Fig. 6C, two adjustable screw pins (331) are provided on the body (32) of the hinge (320) located on the lid (2), said screw pins going through the same body and their ends making up a stop means against which the lever (33) is made to abut upon closing the lid (2). In this way, the angular position (α) of lever (33) upon closing the lid (2) can be adjusted at will.

In practice, the spontaneous lifting of the lid (2) is prevented by the pressure inside the tank even if the actuator (4) is not driven, that is, also in case the forces determining the closing of the lid (2) are not present.

As illustrated in the figures of the attached drawings, the tank's body (1) is provided with mouths (H, K) of known type for the introduction of fluids intended for heating/cooling the tank and for the circulation of the dyeing bath.

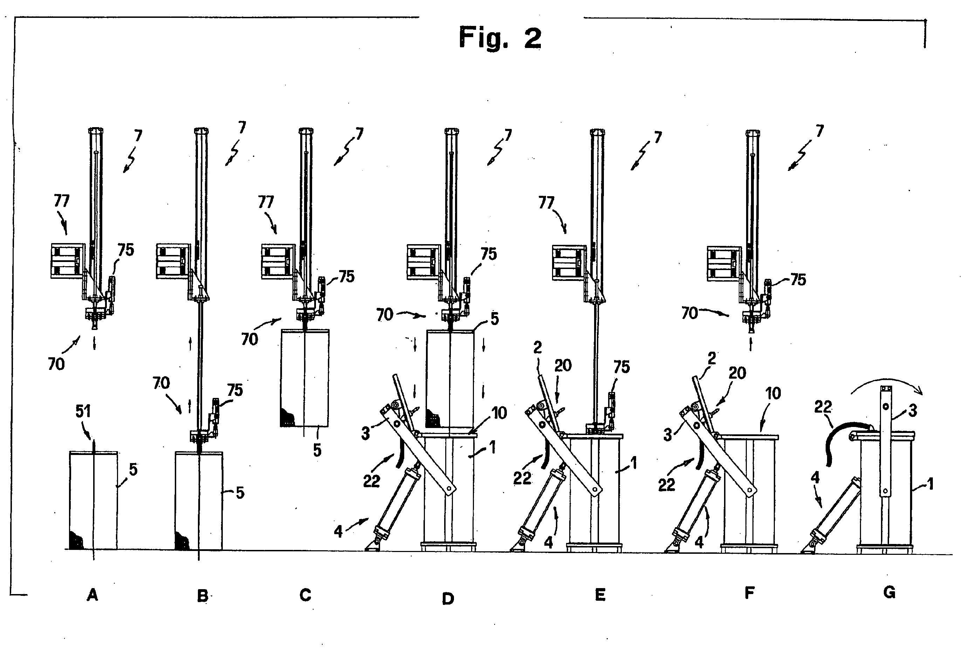

Moreover, as illustrated in Figs. 2D-2G, a nozzle (20) can be associated with the tank's lid (2) for feeding a service fluid, such as a colouring substance, via a hose (22) connected with a pump of known type and not described nor illustrated in detail.

The materials to be dyed may be, for example, rolls or patches of fabric held in perforated basket (5) - as shown in Figs. 2A-2G, or reels of yarn fitted on reel-holders (6), as shown in Figs. 4A-4C.

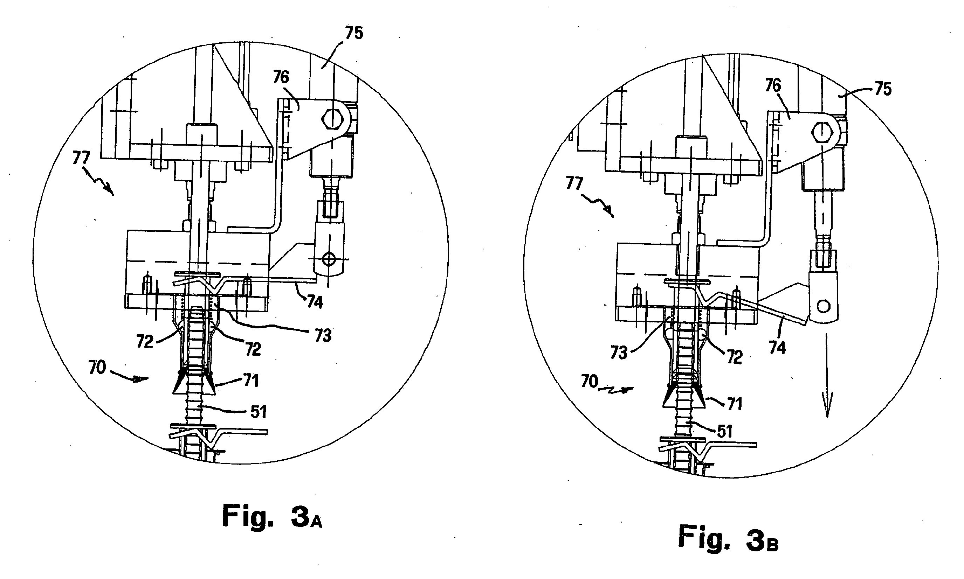

To automate the dyeing process, use can be made of a mechanical arm (7) - known per se to those skilled in the art - able to remove the baskets (5) and the reel-holders (6) from a standby plane (P) to dispose them into the tank and, upon completion of the dyeing cycle, removing same baskets from the tank and dispose them onto said plane (P) or another plane (for example, a plane onto which the baskets and reel-holders with treated materials are disposed). The said arm (7) is provided at the bottom with a grip section (70) intended for engaging an upper appendix (51; 61) of the basket (5) or of the reel-holder (6) upon the hooking thereof, and disengaging it upon the release step. The said grip section (70) of arm (7) comprises a bush with lead-in mouth (71) to be fitted onto the said appendix (51; 61) upon hooking either the basket or reel-holder, with an intermediate cylindrical portion and a rear conical portion followed by a further cylindrical portion. The bush (71) receives a plurality of balls (72) onto which a spring (73), also housed inside the rear cylindrical portion of the same bush (71), is made to act from above. Acting on the spring (73) is a lever (74) which is operated by a pneumatic actuator (75) mounted on the same arm (7), that is, engaged with a corresponding support bracket (76). When the lever (74) is in horizontal position, as shown in Fig. 3A, the spring (73) causes the balls (72) to press the corrugated surface of appendix (51; 61) exhibetd by the basket (5) or by the reel-holder (6). Vice versa, when the lever (74) is rotated upwards, as in Fig. 3B, the balls (72) are no longer acted upon by the spring (73) and, as a consequence, the said appendix is released. In practice, upon hooking a basket (5) or a reel-holder (6), the unit (70) takes up the configuration of Fig. 3A. Upon the release of the basket or reel-holder, the unit (70) takes up the configuration of Fig. 3B. The said arm (7) is mounted on a movable support (77) allowing the positioning of same arm (7), and thus of the engagement/disengagement unit (70), in correspondence of the resting sites of baskets (5) and reel-holders (6) and in correspondence of tank (1). The said movable support (77) is engaged with electric motors (not shown) by using connection means of known type, said motors being in turn engaged with a programmable control unit also of known type and which operates the actuator (4) for causing either the opening/closing of the tank's lid (2), upon the arrival of baskets (5) or reel-holders (6) during the loading step, or the removal thereof during the unloading step, that is upon completion of the dyeing.

Practically, the construction details may vary in any equivalent way as far as the shape, dimensions, elements disposition, nature of the used materials are concerned, without nevertheless departing from the scope of the adopted solution idea and, thereby, remaining within the limits of the protection granted to the present patent for industrial invention.

## Claims

1. Tank for dyeing textile materials, comprising a storage body (1) having a vertical axis with an upper mouth (10) for introducing dyeing liquid and the materials into said body (1) and respectively for the removal thereof, and a lower basis resting on a standby plane (P), and a lid (2) of said mouth (10) said tank further comprising opening and respectively closing means with an actuator (4) acting on said lid (2) by means comprising an arm (3) wherein said actuator (4) in connected with said arm (3) via a hinge (43), **characterized in that**
said lid (2) is engaged with the body (1) by means of a hinge (21), and
said arm (3) is connected, on one end, with the body (1) via a hinge (31) having its axis parallel to that of the hinge (21) which links the lid (2) to the body (1) and, on the other end, with the lid (2) via a lever (33)
whereby
said lever (33) is hinged, on one end, to said arm (3) via a hinge (330) and, on the other end, to the lid (2) via a hinge (320), wherein
in closing condition, said lid (2) is disposed in a position between said hinge (330) connecting said lever (33) and said arm (3), and said hinge (31) linking the arm (3) to the body (1).

2. Tank according to claim 1, **characterized in that** said arm (3) makes part of a fork structure comprising two facing arms joined by a cross-piece (30).

3. Tank according to claim 1, **characterized in that** said actuator (4) is fastened to a plane which acts as a support for the tank .

4. Tank according to claim 1, **characterised in that** said lid (2) is associated with a nozzle (20) for introducing service fluid into the tank.

5. Tank according to claim 1, **characterised in that** the angular position (α) of said lever (33), upon closing the same tank, is adjustable.

6. Tank according to claim 1, **characterized in that** said hinge (43) connecting said arm (3) with said actuator (4), and said hinge (330) connecting said lever (33) with said arm (3), are offset in respect to said hinge (320) connecting one end of said lever (33) with said list (2) in order to prevent the opening of said lid (2) in the absence of the forces exerted for closing said tank.

7. Apparatus for dyeing textile materials comprising a tank according to claim 1 further comprising means (7) for automatically positioning a basket (5) or a reel-holder (6) therein.

## Patentansprüche

1. Behälter zum Färben von Textilmaterialien, enthaltend einen Aufnahmekörper (1) mit einer vertikalen Achse und einer oberen Öffnung (10) zum Einfüllen von Färbeflüssigkeit und der Materialien in den genannten Körper (1) und jeweils zum Herausnehmen derselben, sowie einen unteren, auf einer Standebene (P) aufliegenden Sockel, und einen Deckel (2) der genannten Öffnung (10), wobei der genannte Behälter (1) ausserdem Öffnungs- und jeweils Schliessmittel mit einem Antrieb (4) enthält, der auf den genannten Deckel (2) mit Hilfe von Mitteln wirkt, enthaltend einen Arm (3), wobei der genannte Antrieb (4) mit dem genannten Arm (3) über ein Scharnier (43) verbunden ist, **dadurch gekennzeichnet, dass** der genannte Deckel (2) mit dem Körper (1) mit Hilfe eines Scharniers (21) verbunden ist, und dass der genannte Arm (3) mit einem Ende mit dem Körper (1) über ein Scharnier (31) verbunden ist, dessen Achse parallel zu der des Scharniers (21) verläuft, welches den Deckel (2) mit dem Körper (1) verbindet, und mit dem anderen Ende mit dem Deckel (2) über einen Hebel (33), wobei der genannte Hebel (33) mit einem Ende über ein Scharnier (330) an den genannten Arm (3) angelenkt ist und mit dem anderen Ende über ein Scharnier (320) an den genannten Deckel (2), und wobei im geschlossenen Zustand der genannte Deckel (2) in einer Position zwischen dem genannten, den genannten Hebel (33) und den genannten Arm (3) verbindenden Scharnier (330) und dem genannten Scharnier (31) angeordnet ist, durch welches Arm (3) an den Körper (1) anlenkt ist.

2. Behälter nach Patentanspruch 1, **dadurch gekennzeichnet, dass** der genannte Arm (3) Teil einer Gabelstruktur ist, enthaltend zwei einander gegenüberliegende Arme, die durch ein Querstück (30) miteinander verbunden sind.

3. Behälter nach Patentanspruch 1, **dadurch gekennzeichnet, dass** der genannte Antrieb (4) an einer Fläche befestigt ist, welche als Stütze für den Behälter wirkt.

4. Behälter nach Patentanspruch 1, **dadurch gekennzeichnet, dass** der genannte Deckel (2) mit einer Düse (20) zum Eingeben einer Betriebsflüssigkeit in den Behälter versehen ist.

5. Behälter nach Patentanspruch 1, **dadurch gekennzeichnet, dass** die Winkelposition (α) des genannten Hebels (33) nach dem Schliessen desselben Behälters einstellbar ist.

6. Behälter nach Patentanspruch 1, **dadurch gekennzeichnet, dass** das genannte, den genannten Arm (3) mit dem genannten Antrieb (4) verbindende Scharnier (43) und das genannte, den genannten Hebel (33) mit dem genannten Arm (3) verbindende Scharnier (330) im Verhältnis zu dem genannten Scharnier (320), welches ein Ende des genannten Hebels (33) mit dem genannten Deckel (2) verbindet, versetzt sind, um das Öffnen des genannten Deckels (2) beim Fehlen der zum Schliessen des genannten Behälters ausgeübten Kräfte zu verhindern.

7. Vorrichtung zum Färben von Textilmaterialien, enthaltend einen Behälter (1) nach Patentanspruch 1, sowie weiter enthaltend Mittel (7) zum automatischen Positionieren eines Korbes (5) oder eines Spulenhalters (6) darin.

## Revendications

1. Une cuve pour teindre des matières textiles, comprenant un corps de stockage (1) à axe vertical doté d'une bouche supérieure (10) pour l'introduction d'un liquide de teinture et des matières en question dans ledit corps (1) et, respectivement, pour leur extraction, et une base inférieure reposant sur un plan d'attente (P), ainsi qu'un couvercle (2) de ladite bouche (10), ladite cuve comprenant en outre des moyens d'ouverture et, respectivement, de fermeture dotés d'un actionneur (4) agissant sur ledit couvercle (2) par l'intermédiaire de moyens comprenant un bras (3), où ledit actionneur (4) est relié audit bras (3) par l'intermédiaire d'une charnière (43), ladite cuve étant **caractérisée en ce que** ledit couvercle (2) est associé au corps (1) par l'intermédiaire d'une charnière (21) et ledit bras (3) est relié, à une extrémité, au corps (1) par l'intermédiaire d'une charnière (31) dont l'axe est parallèle à celui de la charnière (21) reliant le couvercle (2) au corps (1) et, à l'autre extrémité, au couvercle (2) par l'intermédiaire d'un levier (33), où ledit levier (33) est articulé, à une extrémité, audit bras (3) par l'intermédiaire d'une charnière (330) et, à l'autre extrémité, au couvercle (2) par l'intermédiaire d'une charnière (320), et où, dans la condition de fermeture, ledit couvercle (2) est interposé entre ladite charnière (330) reliant ledit levier (33) et ledit bras (3) et ladite charnière (31) reliant le bras (3) au corps (1).

2. La cuve selon la revendication 1, **caractérisée en ce que** ledit bras (3) fait partie d'une structure en fourche comprenant deux bras se faisant face et réunis par une traverse (30).

3. La cuve selon la revendication 1, **caractérisée en ce que** ledit actionneur (4) est fixé à un plan qui sert de support à la cuve.

4. La cuve selon la revendication 1, **caractérisée en ce que** ledit couvercle (2) est associé à une buse (20) pour l'introduction d'un fluide de service dans la cuve elle-même.

5. La cuve selon la revendication 1, **caractérisée en ce que** la position angulaire (α) dudit levier (33), lors de la fermeture de la cuve, est réglable.

6. La cuve selon la revendication 1, **caractérisée en ce que** ladite charnière (43) reliant ledit bras (3) audit actionneur (4) et ladite charnière (330) reliant ledit levier (33) audit bras (3) sont décalées par rapport à ladite charnière (320) reliant une extrémité dudit levier (33) audit couvercle (2) de manière à empêcher l'ouverture dudit couvercle (2) en l'absence des forces exercées pour fermer ladite cuve.

7. Un appareil pour teindre des matières textiles comprenant une cuve selon la revendication 1 comprenant en outre des moyens (7) pour le positionnement automatique d'un panier (5) ou d'un porte-bobines (6) à l'intérieur de la cuve elle-même.
